# EUROPÄISCHE PATENTSCHRIFT

(11) **EP 2 544 876 B1**
(45) Veröffentlichungstag und Bekanntmachung des Hinweises auf die Patenterteilung: **17.02.2016**
(21) Anmeldenummer: 11716465.7
(22) Anmeldetag: 18.02.2011
(51) Int. Cl.: B29C 49/56

(54) **VORRICHTUNG ZUR BLASFORMUNG VON BEHÄLTERN**
DEVICE FOR BLOW-MOLDING CONTAINERS
DISPOSITIF DE MOULAGE PAR SOUFFLAGE DE CONTENANTS

(30) Priorität: 11.03.2010 DE 102010012502
(43) Veröffentlichungstag der Anmeldung: 16.01.2013
(73) Patentinhaber: KHS Corpoplast GmbH, 22145 Hamburg (DE)
(72) Erfinder: LINKE, Michael, 22159 Hamburg (DE); BAUMGARTE, Rolf, 22926 Ahrensburg (DE); KLATT, Dieter, 22147 Hamburg (DE); GODAU, Günther, 22145 (DE)
(74) Vertreter: Hausfeld, Norbert
(86) Internationale Anmeldenummer: PCT/DE2011/000163
(87) Internationale Veröffentlichungsnummer: WO 2011/110147

(56) Entgegenhaltungen:
- EP-A1- 0 565 916
- EP-A2- 1 312 459
- FR-A1- 2 813 231

## Beschreibung

Die Erfindung betrifft eine Vorrichtung zur Blasformung von Behältern, die mindestens eine Blasstation mit einer Blasform aufweist, sowie bei der die Blasform von einem Träger einer Blasstation gehaltert ist, und bei der ein Druckbereich von einer Dichtung gegenüber einer Umgebung abgedichtet ist.

Bei einer Behälterformung durch Blasdruckeinwirkung werden Vorformlinge aus einem thermoplastischen Material, beispielsweise Vorformlinge aus PET (Polyethylenterephthalat), innerhalb einer Blasmaschine unterschiedlichen Bearbeitungsstationen zugeführt. Typischerweise weist eine derartige Blasmaschine eine Heizeinrichtung sowie eine Blaseinrichtung auf, in deren Bereich der zuvor temperierte Vorformling durch biaxiale Orientierung zu einem Behälter expandiert wird. Die Expansion erfolgt mit Hilfe von Druckluft, die in den zu expandierenden Vorformling eingeleitet wird. Der verfahrenstechnische Ablauf bei einer derartigen Expansion des Vorformlings wird in der DE-OS 43 40 291 erläutert. Die einleitend erwähnte Einleitung des unter Druck stehenden Gases umfaßt auch die Druckgaseinleitung in die sich entwickelnde Behälterblase sowie die Druckgaseinleitung in den Vorformling zu Beginn des Blasvorganges.

Der grundsätzliche Aufbau einer Blasstation zur Behälterformung wird in der DE-OS 42 12 583 beschrieben. Möglichkeiten zur Temperierung der Vorformlinge werden in der DE-OS 23 52 926 erläutert.

Innerhalb der Vorrichtung zur Blasformung können die Vorformlinge sowie die geblasenen Behälter mit Hilfe unterschiedlicher Handhabungseinrichtungen transportiert werden. Bewährt hat sich insbesondere die Verwendung von Transportdornen, auf die die Vorformlinge aufgesteckt werden. Die Vorformlinge können aber auch mit anderen Trageinrichtungen gehandhabt werden. Die Verwendung von Greifzangen zur Handhabung von Vorformlingen und die Verwendung von Spreizdornen, die zur Halterung in einen Mündungsbereich des Vorformlings einführbar sind, gehören ebenfalls zu den verfügbaren Konstruktionen.

Eine Handhabung von Behältern unter Verwendung von Übergaberädern wird beispielsweise in der DE-OS 199 06 438 bei einer Anordnung des Übergaberades zwischen einem Blasrad und einer Ausgabestrecke beschrieben.

Die bereits erläuterte Handhabung der Vorformlinge erfolgt zum einen bei den sogenannten Zweistufenverfahren, bei denen die Vorformlinge zunächst in einem Spritzgußverfahren hergestellt, anschließend zwischengelagert und erst später hinsichtlich ihrer Temperatur konditioniert und zu einem Behälter aufgeblasen werden. Zum anderen erfolgt eine Anwendung bei den sogenannten Einstufenverfahren, bei denen die Vorformlinge unmittelbar nach ihrer spritzgußtechnischen Herstellung und einer ausreichenden Verfestigung geeignet temperiert und anschließend aufgeblasen werden.

Im Hinblick auf die verwendeten Blasstationen sind unterschiedliche Ausführungsformen bekannt. Bei Blasstationen, die auf rotierenden Transporträdern angeordnet sind, ist eine buchartige Aufklappbarkeit der Formträger häufig anzutreffen. Es ist aber auch möglich, relativ zueinander verschiebliche oder andersartig geführte Formträger einzusetzen. Bei ortsfesten Blasstationen, die insbesondere dafür geeignet sind, mehrere Kavitäten zur Behälterformung aufzunehmen, werden typischerweise parallel zueinander angeordnete Platten als Formträger verwendet.

Gemäß dem Stand der Technik ist es bekannt, die Anschlußelemente sowohl pneumatisch als auch mechanisch unter Verwendung von Kurvensteuerungen zu positionieren. Kurvensteuerungen haben sich insbesondere bei Blasmaschinen mit rotierenden Blasrädern bewährt, da hier in Abhängigkeit von einer Rotationsbewegung des Blasrades die jeweiligen Positionierungen von der Kurvensteuerung vorgegeben werden können. Die Verwendung derartiger Kurvensteuerungen vermeidet einen zusätzlichen Druckluftverbrauch.

Typischerweise werden im Bereich der Blasstationen die verwendeten Blasformen von Formträgern gehaltert. Die Blasformen sind in der Regel in zwei seitliche Blasformhälften sowie eine Bodenform unterteilt. Die Formträger werden typischerweise mechanisch miteinander verriegelt oder mechanisch gegeneinander verspannt. Bei einer Umformung der Vorformlinge in die Behälter als Folge einer Blasdruckeinwirkung ist dafür zu sorgen, daß ein Entstehen von Formspalten, die sich auf dem Behälter aufprägen würden, verhindert werden.

Bekannt ist es deshalb, mindestens eine der Blasformhälften pneumatisch gegenüber dem zugeordneten Formträger derart zu verspannen, daß das Entstehen von Formspalten verhindert werden kann. Dies kann beispielsweise dadurch erfolgen, daß der in die Blasstation eingeleitete Blasdruck gleichzeitig auch einer pneumatischen Verspannungseinrichtung zugeführt wird und hierdurch mit einem steigenden Innendruck im zu blasenden Behälter und somit auch in der Blasform auch eine steigende Zuhaltekraft erzeugt wird.

Typischerweise sind die pneumatischen Verspanneinrichtungen, die im Bereich der Blasstation angeordnet sind, über Anschlußschläuche mit zugeordneten Steuerventilen verbunden. Nach einer erfolgten Behälterherstellung und vor einem Öffnen der Blasform wird sowohl der Innendruck aus dem geblasenen Behälter als auch der Druck aus der pneumatischen Spanneinrichtung abgelassen. Typischerweise erfolgt dies unter Verwendung von Schalldämpfern, um entstehende Ausströmgeräusche zu dämpfen.

Im Bereich der pneumatischen verspanneinrichtungen wird mindestens ein Hohlraum bereitgestellt, der gegenüber einer Umgebung abzudichten ist. Typischerweise erfolgt eine derartige Abdichtung unter Verwendung eines elastomeren Materials, das als ein umlaufendes Profil realisiert ist. Ein Beispiel für eine derartige Dichtung wird beispielsweise in der gattungsbildenden und nächstkommenden DE 199 29 033.4 beschrieben. Einen ähnlichen Stand der Technik zeigen die FR 2 813 231 A1 und die EP 0 565 916 A1.

Moderne Blasmaschinen werden mit einer hohen Ausstoßleistung betrieben. Üblich sind Produktionsleistungen von etwa 2.000 Flaschen je Stunde und Blasstation. Es wird angestrebt, diese Produktionsleistungen noch zu erhöhen. Für die Herstellung jeden Behälters wird einmal die pneumatische Verspannung der Blasformen durchgeführt und entsprechende Lastwechsel im Bereich der umlaufenden Dichtung erzeugt. Diese Vielzahl von Lastwechseln führen auf Dauer zu Beschädigungen des Dichtungsmaterials, insbesondere zu einem Einreißen im Bereich von Profilierungen der Oberfläche. Diese Oberflächenprofilierungen werden aber angestrebt, um eine verbesserte Dichtwirkung zu erreichen.

Aufgabe der vorliegenden Erfindung ist es, eine Vorrichtung der einleitend genannten Art derart zu konstruieren, daß die Lebensdauer der Dichtung erhöht wird.

Diese Aufgabe wird erfindungsgemäß dadurch gelöst, daß die Dichtung aus mindestens zwei Bereichen ausgebildet ist, von denen ein erster Bereich aus einem härteren Material als der zweite Bereich besteht und daß beide Bereiche relativ zueinander unbeweglich verbunden sind. Weiterhin ist vorgesehen, dass der erste Bereich aus dem härteren Material dem Druckbereich abgewandt und der zweite Bereich aus dem weicheren Material dem Druckbereich zugewandt angeordnet ist.

Durch die Kombination eines ersten Bereiches aus einem härteren Material und eines zweiten Bereiches aus einem weicheren Material ist es möglich, im Bereich des weicheren Materials ein gegebenenfalls gewünschtes Oberflächenprofil bereitzustellen und trotzdem durch das härtere Material die Stabilität derart zu erhöhen, daß insbesondere ein Aufreißen des weicheren Materials im Bereich von Vertiefungen des Oberflächenprofils vermieden oder zumindest stark reduziert wird. Durch die zum Druckbereich zu- bzw. abgewandte Anordnung des weichen bzw. des härteren Materials wird das weichere Material bei einer Druckbeaufschlagung gegen das härtere Material gedrückt, wodurch zum einen eine ausreichende Stabilität erreicht wird und darüber hinaus die Dichtwirkung erhöht wird.

Eine preiswerte Fertigung wird dadurch unterstützt, daß der erste Bereich aus einem Kunststoff besteht.

Eine dauerhafte Dichtwirkung wird dadurch unterstützt, daß der zweite Bereich aus einem elastomeren Material besteht.

Eine einfache Abgrenzung des Druckbereiches wird dadurch erreicht, daß die Dichtung ein geschlossen umlaufendes Dichtungsprofil ausbildet.

Gemäß einer typischen Ausführungsform ist vorgesehen, daß die Dichtung als Teil einer Formverspannung der Blasstation ausgebildet ist.

Eine zweckmäßige Anordnung wird dadurch definiert, daß die Dichtung zwischen einem Formträger und der Blasform angeordnet ist.

Zur Unterstützung einer Verformung der Dichtung bei einer Druckeinwirkung wird vorgeschlagen, daß die Dichtung als eine Lippendichtung ausgebildet ist.

Eine ausreichende mechanische Abstützung bei der Druckbeaufschlagung wird dadurch erreicht, daß die Dichtung mindestens bereichsweise von einer Vertiefung aufgenommen ist.

Ein guter Kompromiß zwischen einer ausreichenden Festigkeit und einer guten Verformbarkeit wird dadurch erreicht, daß der erste Bereich etwa 10% bis 70% des Volumens der Dichtung ausfüllt.

Eine vorteilhafte Gestaltung zur Aufnahme von einwirkenden Kräften wird dadurch erreicht, daß sich eine Trennfläche zwischen den Bereichen mit einer senkrechten Ausdehnungskomponente zu einer Grundfläche der Vertiefung erstreckt.

In den Zeichnungen sind Ausführungsbeispiele der Erfindung schematisch dargestellt. Es zeigen:
- Fig. 1: Eine perspektivische Darstellung einer Blasstation zur Herstellung von Behältern aus Vorformlingen,
- Fig. 2: einen Längsschnitt durch eine Blasform, in der ein Vorformling gereckt und expandiert wird,
- Fig. 3: eine Skizze zur Veranschaulichung eines grundsätzlichen Aufbaus einer Vorrichtung zur Blasformung von Behältern,
- Fig. 4: eine modifizierte Heizstrecke mit vergrößerter Heizkapazität,
- Fig. 5: einen Längsschnitt durch eine in eine Halterungsvertiefung eingesetzte Dichtung,
- Fig. 6: eine vergrößerte Darstellung der Einzelheit VI in Figur 5,
- Fig. 7: eine Darstellung ähnlich zu Fig. 5 mit einem abgewandelten Dichtungsprofil.

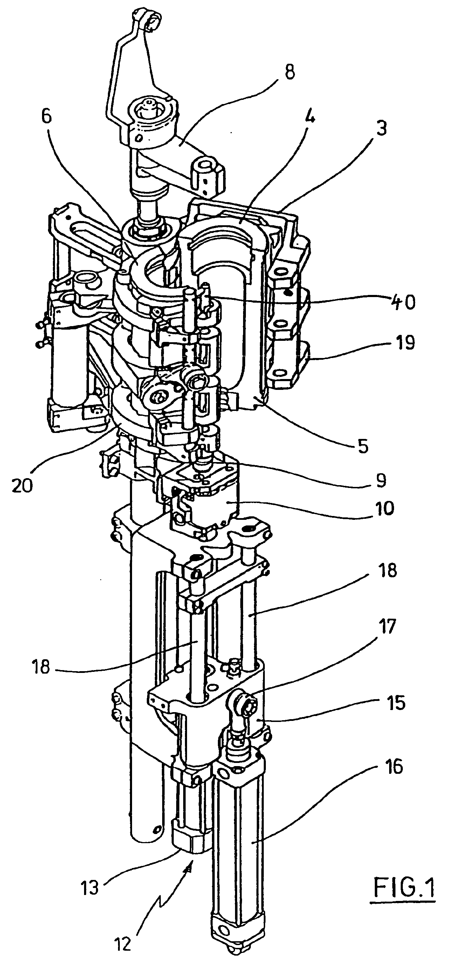

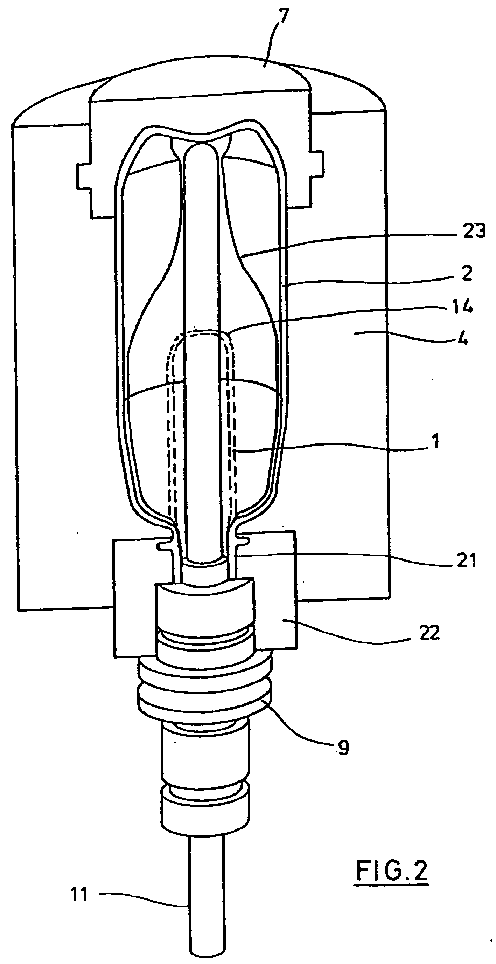

Der prinzipielle Aufbau einer Vorrichtung zur Umformung von Vorformlingen (1) in Behälter (2) ist in Fig. 1 und in Fig. 2 dargestellt.

Die Vorrichtung zur Formung des Behälters (2) besteht im wesentlichen aus einer Blasstation (3), die mit einer Blasform (4) versehen ist, in die ein Vorformling (1) einsetzbar ist. Der Vorformling (1) kann ein spritzgegossenes Teil aus Polyethylenterephthalat sein. Zur Ermöglichung eines Einsetzens des Vorformlings (1) in die Blasform (4) und zur Ermöglichung eines Herausnehmens des fertigen Behälters (2) besteht die Blasform (4) aus Formhälften (5, 6) und einem Bodenteil (7), das von einer Hubvorrichtung (8) positionierbar ist. Der Vorformling (1) kann im Bereich der Blasstation (3) von einem Transportdorn (9) gehalten sein, der gemeinsam mit dem Vorformling (1) eine Mehrzahl von Behandlungsstationen innerhalb der Vorrichtung durchläuft. Es ist aber auch möglich, den Vorformling (1) beispielsweise über Zangen oder andere Handhabungsmittel direkt in die Blasform (4) einzusetzen.

Zur Ermöglichung einer Druckluftzuleitung ist unterhalb des Transportdornes (9) ein Anschlußkolben (10) angeordnet, der dem Vorformling (1) Druckluft zuführt und gleichzeitig eine Abdichtung relativ zum Transportdorn (9) vornimmt. Bei einer abgewandelten Konstruktion ist es grundsätzlich aber auch denkbar, feste Druckluftzuleitungen zu verwenden.

Eine Reckung des Vorformlings (1) erfolgt bei diesem Ausführungsbeispiel mit Hilfe einer Reckstange (11), die von einem Zylinder (12) positioniert wird. Gemäß einer anderen Ausführungsform wird eine mechanische Positionierung der Reckstange (11) über Kurvensegmente durchgeführt, die von Abgriffrollen beaufschlagt sind. Die Verwendung von Kurvensegmenten ist insbesondere dann zweckmäßig, wenn eine Mehrzahl von Blasstationen (3) auf einem rotierenden Blasrad angeordnet sind.

Bei der in Fig. 1 dargestellten Ausführungsform ist das Recksystem derart ausgebildet, daß eine Tandem-Anordnung von zwei Zylindern (12) bereitgestellt ist. Von einem Primärzylinder (13) wird die Reckstange (11) zunächst vor Beginn des eigentlichen Reckvorganges bis in den Bereich eines Bodens (14) des Vorformlings (1) gefahren. Während des eigentlichen Reckvorganges wird der Primärzylinder (13) mit ausgefahrener Reckstange gemeinsam mit einem den Primärzylinder (13) tragenden Schlitten (15) von einem Sekundärzylinder (16) oder über eine Kurvensteuerung positioniert. Insbesondere ist daran gedacht, den Sekundärzylinder (16) derart kurvengesteuert einzusetzen, daß von einer Führungsrolle (17), die während der Durchführung des Reckvorganges an einer Kurvenbahn entlang gleitet, eine aktuelle Reckposition vorgegeben wird. Die Führungsrolle (17) wird vom Sekundärzylinder (16) gegen die Führungsbahn gedrückt. Der Schlitten (15) gleitet entlang von zwei Führungselementen (18).

Nach einem Schließen der im Bereich von Trägern (19, 20) angeordneten Formhälften (5, 6) erfolgt eine Verriegelung der Träger (19, 20) relativ zueinander mit Hilfe einer Verriegelungseinrichtung (20).

Zur Anpassung an unterschiedliche Formen eines Mündungsabschnittes (21) des Vorformlings (1) ist gemäß Fig. 2 die Verwendung separater Gewindeeinsätze (22) im Bereich der Blasform (4) vorgesehen.

Fig. 2 zeigt zusätzlich zum geblasenen Behälter (2) auch gestrichelt eingezeichnet den Vorformling (1) und schematisch eine sich entwickelnde Behälterblase (23).

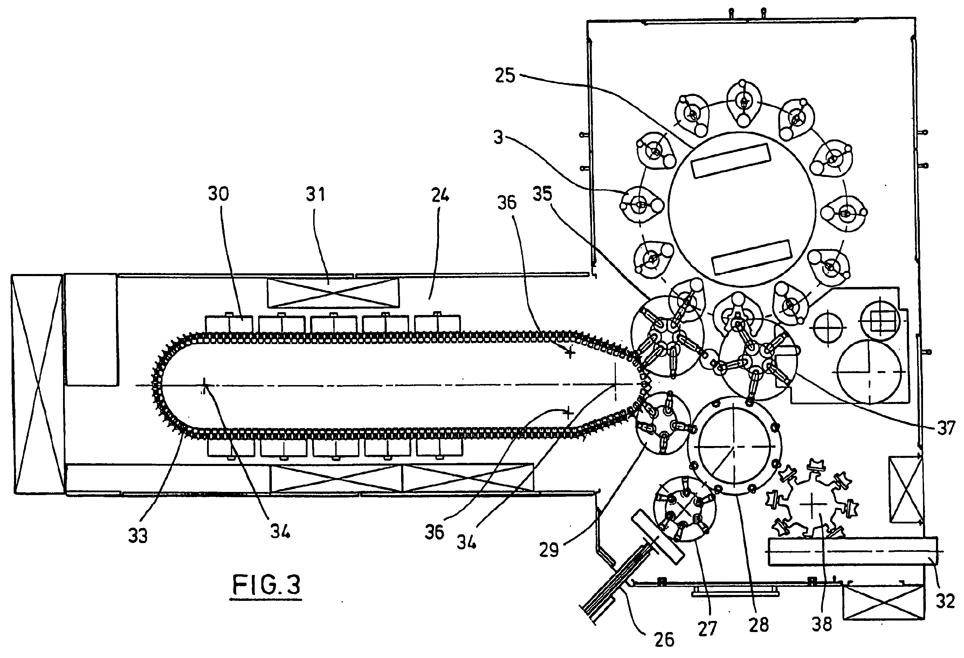

Fig. 3 zeigt den grundsätzlichen Aufbau einer Blasmaschine, die mit einer Heizstrecke (24) sowie einem rotierenden Blasrad (25) versehen ist. Ausgehend von einer Vorformlingseingabe (26) werden die Vorformlinge (1) von Übergaberädern (27, 28, 29) in den Bereich der Heizstrecke (24) transportiert. Entlang der Heizstrecke (24) sind Heizstrahler (30) sowie Gebläse (31) angeordnet, um die Vorformlinge (1) zu temperieren. Nach einer ausreichenden Temperierung der Vorformlinge (1) werden diese an das Blasrad (25) übergeben, in dessen Bereich die Blasstationen (3) angeordnet sind. Die fertig geblasenen Behälter (2) werden von weiteren Übergaberädern einer Ausgabestrecke (32) zugeführt.

Um einen Vorformling (1) derart in einen Behälter (2) umformen zu können, daß der Behälter (2) Materialeigenschaften aufweist, die eine lange Verwendungsfähigkeit von innerhalb des Behälters (2) abgefüllten Lebensmitteln, insbesondere von Getränken, gewährleisten, müssen spezielle Verfahrensschritte bei der Beheizung und Orientierung der Vorformlinge (1) eingehalten werden. Darüber hinaus können vorteilhafte Wirkungen durch Einhaltung spezieller Dimensionierungsvorschriften erzielt werden.

Als thermoplastisches Material können unterschiedliche Kunststoffe verwendet werden. Einsatzfähig sind beispielsweise PET, PEN oder PP.

Die Expansion des Vorformlings (1) während des Orientierungsvorganges erfolgt durch Druckluftzuführung. Die Druckluftzuführung ist in eine Vorblasphase, in der Gas, zum Beispiel Preßluft, mit einem niedrigen Druckniveau zugeführt wird und in eine sich anschließende Hauptblasphase unterteilt, in der Gas mit einem höheren Druckniveau zugeführt wird. Während der Vorblasphase wird typischerweise Druckluft mit einem Druck im Intervall von 10 bar bis 25 bar verwendet und während der Hauptblasphase wird Druckluft mit einem Druck im Intervall von 25 bar bis 40 bar zugeführt.

Aus Fig. 3 ist ebenfalls erkennbar, daß bei der dargestellten Ausführungsform die Heizstrecke (24) aus einer Vielzahl umlaufender Transportelemente (33) ausgebildet ist, die kettenartig aneinandergereiht und entlang von Umlenkrädern (34) geführt sind. Insbesondere ist daran gedacht, durch die kettenartige Anordnung eine im wesentlichen rechteckförmige Grundkontur aufzuspannen. Bei der dargestellten Ausführungsform werden im Bereich der dem Übergaberad (29) und einem Eingaberad (35) zugewandten Ausdehnung der Heizstrecke (24) ein einzelnes relativ groß dimensioniertes Umlenkrad (34) und im Bereich von benachbarten Umlenkungen zwei vergleichsweise kleiner dimensionierte Umlenkräder (36) verwendet. Grundsätzlich sind aber auch beliebige andere Führungen denkbar.

Zur Ermöglichung einer möglichst dichten Anordnung des Übergaberades (29) und des Eingaberades (35) relativ zueinander erweist sich die dargestellte Anordnung als besonders zwecksmäßig, da im Bereich der entsprechenden Ausdehnung der Heizstrecke (24) drei Umlenkräder (34, 36) positioniert sind, und zwar jeweils die kleineren Umlenkräder (36) im Bereich der Überleitung zu den linearen Verläufen der Heizstrecke (24) und das größere Umlenkrad (34) im unmittelbaren Übergabebereich zum Übergaberad (29) und zum Eingaberad (35). Alternativ zur Verwendung von kettenartigen Transportelementen (33) ist es beispielsweise auch möglich, ein rotierendes Heizrad zu verwenden.

Nach einem fertigen Blasen der Behälter (2) werden diese von einem Entnahmerad (37) aus dem Bereich der Blasstationen (3) herausgeführt und über das Übergaberad (28) und ein Ausgaberad (38) zur Ausgabestrecke (32) transportiert.

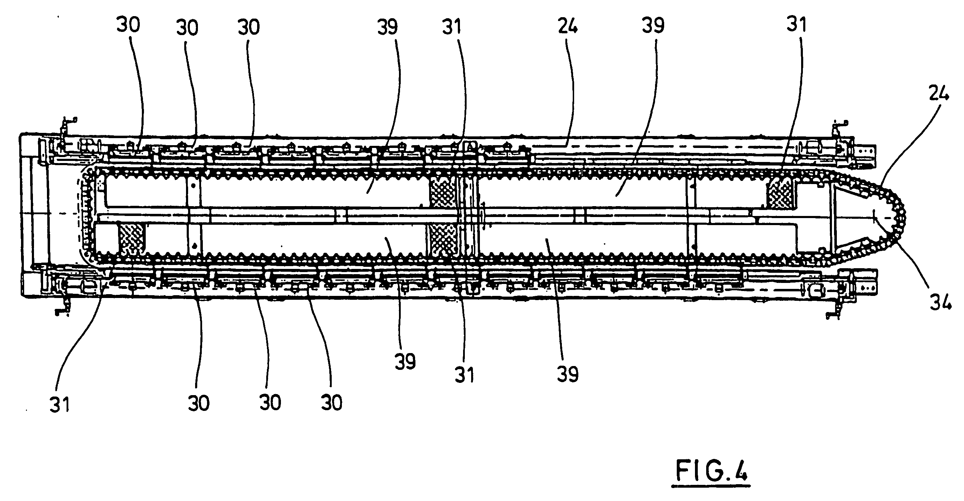

In der in Fig. 4 dargestellten modifizierten Heizstrecke (24) können durch die größere Anzahl von Heizstrahlern (30) eine größere Menge von Vorformlingen (1) je Zeiteinheit temperiert werden. Die Gebläse (31) leiten hier Kühlluft in den Bereich von Kühlluftkanälen (39) ein, die den zugeordneten Heizstrahlern (30) jeweils gegenüberliegen und über Ausströmöffnungen die Kühlluft abgeben. Durch die Anordnung der Ausströmrichtungen wird eine Strömungsrichtung für die Kühlluft im wesentlichen quer zu einer Transportrichtung der Vorformlinge (1) realisiert. Die Kühlluftkanäle (39) können im Bereich von den Heizstrahlern (30) gegenüberliegenden Oberflächen Reflektoren für die Heizstrahlung bereitstellen, ebenfalls ist es möglich, über die abgegebene Kühlluft auch eine Kühlung der Heizstrahler (30) zu realisieren.

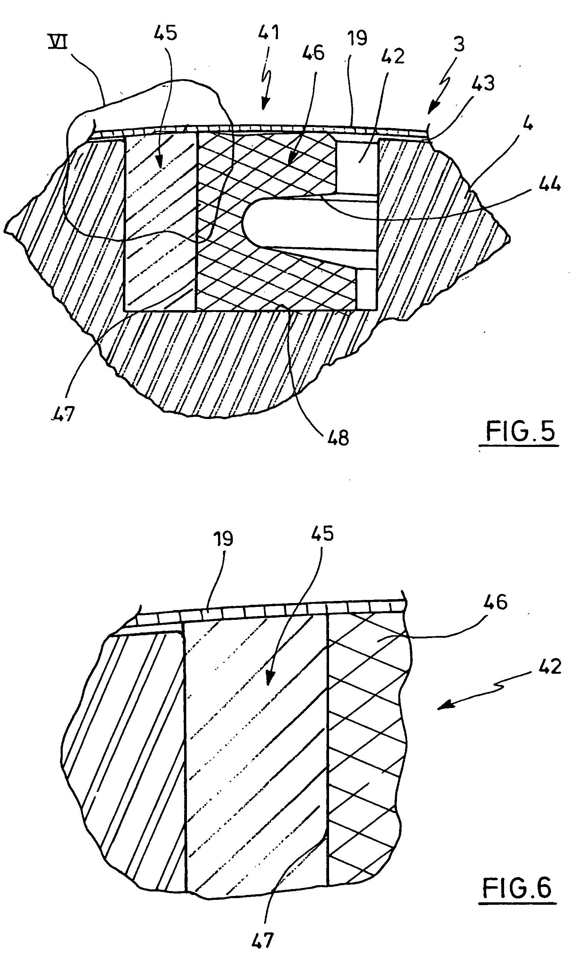

Fig. 5 zeigt eine teilweise Darstellung eines Querschnittes einer Blasstation (3). Zwischen einem Teil der Blasform (4) und dem Formträger (19) ist eine Dichtung (41) angeordnet. Die Dichtung ist in einer Vertiefung (42) positioniert und umschließt in einem geschlossenen Umlauf einen Druckbereich (43). Beim dargestellten Ausführungsbeispiel besitzt die Dichtung (41) ein Oberflächenprofil (44), das eine V-förmige Kontur der Dichtung (1) bereitstellt. Die Vertiefung des V-Profils ist dem Druckbereich (43) zugewandt angeordnet. Mit einem zunehmenden Druck im Druckbereich (43) wird die Dichtung (41) hierdurch zunehmend intensiver gegen den Formträger (19) gedrückt, so daß mit zunehmendem Druck auch eine erhöhte Dichtwirkung erreicht wird.

Die Dichtung (41) besteht aus einem ersten Bereich (45), und einem zweiten Bereich (46), wobei der erste Bereich (45) aus einem härteren Material als der zweite Bereich (46) besteht. Das Oberflächenprofil (44) ist im Bereich des zweiten Bereiches (46) aus dem weicheren Material angeordnet.

Eine Trennfläche (47) zwischen den Bereichen (45, 46) erstreckt sich mit einer Richtungskomponente senkrecht zu einer Grundfläche (48) der Vertiefung (42). Grundsätzlich ist aber auch eine Anordnung schräg zur Grundfläche (48) möglich. Gemäß einer weiteren Ausführungsform ist die Trennfläche (47) nicht im Wesentlichen eben ausgebildet, sondern weist ein nicht-ebenes Verlaufsprofil auf. Fig. 5 zeigt eine Ausführungsform, bei der die Trennfläche (47) im Wesentlichen senkrecht zur Grundfläche (48) angeordnet ist.

Fig. 5 zeigt darüber hinaus ein Ausführungsbeispiel, bei der sich die Bereiche (45, 46) im Wesentlichen mit einer gleichen räumlichen Ausdehnung im Bereich ihrer einander zugewandten Flächen erstrecken. Grundsätzlich ist es aber auch denkbar, unterschiedliche Größen der einander zugewandten Flächen der Bereiche (45, 46) vorzusehen.

Aus Fig. 5 ist ebenfalls erkennbar, daß sich der erste Bereich (45) aus dem härteren Material aus der Vertiefung (42) erhebt und sich bis zum Formträger (19) erstreckt. Eine derartige Ausführungsform besitzt den Vorteil, daß der weiche Bereich (46) auch bei einer Druckbeaufschlagung nicht in einen resultierenden Spalt gedrückt werden kann. Hierdurch wird eine sogenannte Spaltextrusion im Bereich der dem Druck abgewandten Seite der Dichtung (41) vermieden.

Als Material für den ersten Bereich (45) kann beispielsweise PUR verwendet werden. Als Material für den zweiten Bereich (46) kann HNBR zur Anwendung kommen. Grundsätzlich eignen sich für den ersten Bereich (45) feste Kunststoffe oder Metalle, für den zweiten Bereich (46) kommen insbesondere elastomere Materialien in Frage.

Fig. 6 zeigt eine vergrößerte Darstellung der Einzelheit VI aus Fig. 5. Es ist insbesondere zu erkennen, wie sich der erste Bereich (45) aus der Vertiefung (42) herauserstreckt und an den Formträger (19) grenzt.

Das Überstehen des ersten Bereiches (45) aus der Vertiefung (42) heraus ist in Fig. 5 und Fig. 6 durch einen Vorsprung gekennzeichnet.

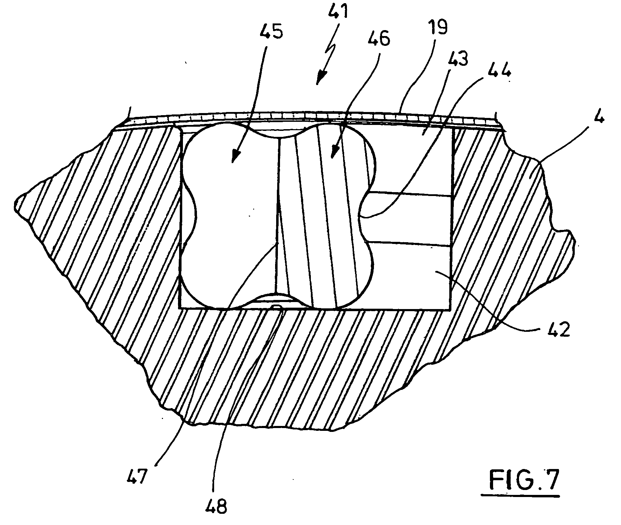

Fig. 7 zeigt eine abgewandelte Ausführungsform der Dichtung (41). Das Oberflächenprofil (44) ist hier weniger intensiv als bei der Ausführungsform gemäß Fig. 5 ausgebildet, erstreckt sich dafür aber im Bereich aller vier Seitenflächen der Dichtung (41), die mit einer näherungsweisen quadratischen Grundfläche versehen ist. Gemäß der Ausführungsform in Fig. 7 sind die Bereiche (45, 46) etwa gleich groß dimensioniert.

Sowohl bei der Ausführungsform gemäß Fig. 5 als auch bei der Ausführungsform in Fig. 7 ist der erste Bereich (45) aus dem härteren Material dem Druckbereich (43) abgewandt und der zweite Bereich (46) aus dem weicheren Material dem Druckbereich (43) zugewandt angeordnet. Hierdurch wird das weichere Material bei einer Druckbeaufschlagung gegen das härtere Material gedrückt, wodurch zum einen eine ausreichende Stabilität erreicht wird und darüber hinaus die Dichtwirkung erhöht wird.

Der geschlossene Umlauf der Dichtung (41) kann eine nahezu beliebige Kontur aufweisen. Bevorzugt sind aber kontinuierliche Verläufe, da hierdurch ungleichmäßige Kraftverteilungen vermieden werden. Beispielsweise ist es möglich, die Dichtung (41) ähnlich zu einem O-Ring mit einer Kreiskontur verlaufen zu lassen. Denkbar sind aber auch ovale oder rechteckförmige Verläufe. Verläufe mit einer eckigen Grundkontur weisen vorzugsweise gerundete Übergänge in den Eckbereichen auf.

Sowohl bei der Ausführungsform gemäß Fig. 5 als auch bei der Ausführungsform gemäß Fig. 7 führt die Beaufschlagung des Druckbereiches (43) mit einem Druck dazu, daß die Dichtung (41) aufgrund des Oberflächenprofils (44) zwischen der Grundfläche (48) und der entsprechenden Kontaktfläche des Formträgers (19) aufgeweitet wird. Die Aufweitung unterstützt die Abdichtung und nimmt mit zunehmendem Druck ebenfalls zu.

Gemäß einer typischen Ausführungsform besteht die Blasform (4) aus Innenschalen und Außenschalen. Die Innenschalen weisen die individuelle Kontur des herzustellenden Behälters (2) auf. Die Außenschalen nehmen erforderlichenfalls Temperiermittelkanäle oder andere Temperierelemente auf und sorgen für die erforderliche mechanische Stabilität. Die Dichtung (41) ist typischerweise im Übergangsbereich von den Außenschalen zu den Formträgern (19, 20) positioniert.

Zur Verbindung der Bereiche (45, 46) miteinander können unterschiedliche Verfahren zum Einsatz kommen. Beispielsweise ist es möglich, die Bereiche (46, 46) miteinander zu verkleben, nachdem die Bereiche (45, 46) zunächst unabhängig voneinander produziert wurden. Es ist aber ebenfalls möglich, die Bereiche (45, 46) über ein sogenanntes Anspritzen in einem gemeinsamen Produktionsschritt herzustellen.

## Patentansprüche

1. Vorrichtung zur Blasformung von Behältern, die mindestens eine Blasstation mit einer Blasform aufweist, sowie bei der die Blasform von einem Träger einer Blasstation gehaltert ist, und bei der ein Druckbereich (43) von einer Dichtung (41) gegenüber einer Umgebung abgedichtet ist und die Dichtung (41) aus mindestens zwei Bereichen (45, 46) ausgebildet ist, von denen ein erster Bereich (45) aus einem härteren Material als der zweite Bereich (46) besteht und beide Bereiche (45, 46) relativ zueinander unbeweglich verbunden sind, **dadurch gekennzeichnet, daß** der erste Bereich (45) aus dem härteren Material dem Druckbereich (43) abgewandt und der zweite Bereich (46) aus dem weicheren Material dem Druckbereich (43) zugewandt angeordnet ist.

2. Vorrichtung nach Anspruch 1, **dadurch gekennzeichnet, daß** der erste Bereich aus einem Kunststoff besteht.

3. Vorrichtung nach Anspruch 1 oder 2, **dadurch gekennzeichnet, daß** der zweite Bereich aus einem elastomeren Material besteht.

4. Vorrichtung nach einem der Ansprüche 1 bis 3, **dadurch gekennzeichnet, daß** die Dichtung (41) ein geschlossen umlaufendes Dichtungsprofil ausbildet.

5. Vorrichtung nach einem der Ansprüche 1 bis 4, **dadurch gekennzeichnet, daß** die Dichtung (41) als Teil einer Formverspannung der Blasstation (3) ausgebildet ist.

6. Vorrichtung nach einem der Ansprüche 1 bis 5, **dadurch gekennzeichnet, daß** die Dichtung (41) zwischen einem Formträger (19, 20) und der Blasform (4) angeordnet ist.

7. Vorrichtung nach einem der Ansprüche 1 bis 6, **dadurch gekennzeichnet, daß** die Dichtung (41) als eine Lippendichtung ausgebildet ist.

8. Vorrichtung nach einem der Ansprüche 1 bis 7, **dadurch gekennzeichnet, daß** die Dichtung (41) mindestens bereichsweise von einer Vertiefung (42) aufgenommen ist.

9. Vorrichtung nach einem der Ansprüche 1 bis 8, **dadurch gekennzeichnet, daß** der erste Bereich (45) etwa 10% bis 70% des Volumens der Dichtung (41) ausfüllt.

10. Vorrichtung nach einem der Ansprüche 1 bis 9, **dadurch gekennzeichnet, daß** sich eine Trennfläche (47) zwischen den Bereichen (45, 46) mit einer senkrechten Ausdehnungskomponente zu einer Grundfläche (48) der Vertiefung (42) erstreckt.

## Claims

1. A device for the blow moulding of containers, the device at least comprising a blowing station having a blow mould, and in which device the blow mould is held by a carrier of a blowing station, and in which device a pressure area (43) is sealed against its environment by means of a seal (41) and the seal (41) is formed from at least two areas (45, 46) of which a first area (45) consists of a material that is harder than that of the second area (46) and both areas (45, 46) are connected in relation to each other in an immobile manner,
**characterised in that**
- the first area (45) that is made of the harder material is arranged facing away from the pressure area (43) and the second area (46) that is made of the softer material is arranged facing the pressure area (43).

2. The device according to Claim 1, **characterised in that** the first area consists of a plastic material.

3. The device according to Claim 1 or 2, **characterised in that** the second area consists of an elastomer material.

4. The device according to any one of Claims 1 to 3, **characterised in that** the seal (41) forms a closed circumferential sealing profile.

5. The device according to any one of Claims 1 to 4, **characterised in that** the seal (41) is formed as part of a mould bracing of the blowing station (3).

6. The device according to any one of Claims 1 to 5, **characterised in that** the seal (41) is arranged between a mould carrier (19, 20) and the blow mould (4).

7. The device according to any one of Claims 1 to 6, **characterised in that** the seal (41) is formed as a lip seal.

8. The device according to any one of Claims 1 to 7, **characterised in that** the seal (41) is received in a recess (42) at least in sections.

9. The device according to any one of Claims 1 to 8, **characterised in that** the first area (45) fills about 10 percent to 70 percent of the volume of the seal (41).

10. The device according to any one of Claims 1 to 9, **characterised in that** a separation plane (47) extends between the areas (45, 46) with a vertical extension component in relation to a base plane (48) of the recess (42).

## Revendications

1. Dispositif de moulage par soufflage de récipients, présentant au moins une station de soufflage avec un moule de soufflage maintenu par un support d'une station de soufflage et dont une zone sous pression (43) est étanchéifiée par rapport au milieu qui l'entoure par un joint (41) constitué d'au moins deux zones (45, 46), une première zone (45) étant réalisée en un matériau plus dur que la seconde zone (46) et les deux zones (45, 46) étant liées de façon à être immobiles l'une par rapport à l'autre, **caractérisé en ce que** la première zone (45) en matériau plus dur est agencée du côté opposé à la zone sous pression (43), la seconde zone (46) en matériau plus doux faisant face à la zone sous pression (43).

2. Dispositif selon la revendication 1, **caractérisé en ce que** la première zone est constituée de matière plastique.

3. Dispositif selon la revendication 1 ou 2, **caractérisé en ce que** la seconde zone est constituée d'un matériau élastomère.

4. Dispositif selon l'une des revendications 1 à 3, **caractérisé en ce que** le joint (41) forme un profil d'étanchéité périphérique fermé.

5. Dispositif selon l'une des revendications 1 à 4, **caractérisé en ce que** le joint (41) est réalisé sous forme de partie d'un dispositif de serrage du moule de la station de soufflage (3).

6. Dispositif selon l'une des revendications 1 à 5, **caractérisé en ce que** le joint (41) est placé entre un support de moule (19, 20) et le moule de soufflage (4).

7. Dispositif selon l'une des revendications 1 à 6, **caractérisé en ce que** le joint (41) est réalisé sous forme de joint à lèvre(s).

8. Dispositif selon l'une des revendications 1 à 7, **caractérisé en ce que** le joint (41) est en partie au moins logé dans une concavité (42).

9. Dispositif selon l'une des revendications 1 à 8, **caractérisé en ce que** la première zone (45) occupe environ 10 % à 70 % du volume du joint (41).

10. Dispositif selon l'une des revendications 1 à 9, **caractérisé en ce qu'**une surface de séparation (47) s'étend entre les zones (45, 46) avec une composante d'extension perpendiculaire à une surface de base (48) de la concavité (42).
